# EUROPEAN PATENT APPLICATION

(11) **EP 4 730 537 A1**
(43) Date of publication of application: **22.04.2026**
(21) Application number: 24924904.6
(22) Date of filing: 09.12.2024
(51) Int. Cl.: H01M 50/383, H01M 50/367, H01M 50/291, H01M 50/249

(54) **BATTERY PACK**

(30) Priority: 15.02.2024 KR 20240021753
(71) Applicant: LG Energy Solution, Ltd., Seoul 07335 (KR)
(72) Inventor: HAN, Min-Hee, Daejeon 34122 (KR); KIM, Soo-Youl, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/020098
(87) International publication number: WO 2025/173879

(57) **Abstract**

Disclosed is a battery pack. The battery pack includes a base plate; a side wall installed on an upper surface of the base plate and forming an inner space; a first battery module installed in the inner space; and a partition wall configured to partition the inner space and having a first hole facing the first battery module and a first flow path communicating with the first hole.

## Description

### TECHNICAL FIELD

The present disclosure relates to a battery pack.

The present application claims priority to Korean Patent Application No. 10-2024-0021753 filed on February 15, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved safety when a thermal event occurs.

The present disclosure is also directed to providing a battery pack that may suppress heat propagation by providing an independent venting path for each battery module when a thermal event occurs.

The present disclosure is also directed to providing a battery pack that may suppress the emission of ignitable particles and flame and discharge the ignitable particles and flame by lowering the temperature of a venting gas when a thermal event occurs.

The present disclosure is also directed to providing a battery pack allowing easy venting control when a thermal event occurs.

### Technical Solution

In one aspect of the present disclosure, there is provided a battery pack comprising: a base plate; a side wall installed on an upper surface of the base plate and forming an inner space; a first battery module installed in the inner space; and a partition wall configured to partition the inner space and having a first hole facing the first battery module and a first flow path communicating with the first hole.

In addition, the battery pack may further comprise a second battery module installed in the inner space, and the partition wall may be located between the first battery module and the second battery module and have a second hole facing the second battery module and a second flow path communicating with the second hole.

In addition, the first flow path and the second flow path may extend along a longitudinal direction of the partition wall.

In addition, the first flow path may be formed above the second flow path.

In addition, the battery pack may further comprise a side wall installed on the upper surface of the base plate and having a third flow path communicating with the first flow path.

In addition, the third flow path may extend along a longitudinal direction of the side wall.

In addition, the side wall may have a fourth flow path communicating with the second flow path.

In addition, the fourth flow path may extend along a longitudinal direction of the side wall.

In addition, the battery pack may further comprise a first fastening member that penetrates the side wall and is fastened to the partition wall.

In addition, the battery pack may further comprise a first gasket disposed between the side wall and the partition wall.

In addition, the battery pack may further comprise a rear wall installed on the upper surface of the base plate to form an appearance of the battery pack and having a fifth flow path communicating with the side wall.

In addition, the battery pack may further comprise a second fastening member that penetrates the side wall and is fastened to the rear wall.

In addition, the battery pack may further comprise a second gasket disposed between the side wall and the rear wall.

In addition, the battery pack may further comprise a pack cover configured to cover the inner space and coupled with the partition wall.

In addition, the battery pack may further comprise a third fastening member that penetrates the pack cover and is fastened to the partition wall.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, heat propagation may be suppressed.

According to at least one of the embodiments of the present disclosure, venting control of a battery pack may be facilitated.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a drawing showing some components of the battery pack of FIG. 1.
FIG. 4 is a drawing showing a first partition wall of the battery pack of FIG. 2.
FIGS. 5 and 6 are drawings showing a second partition wall of the battery pack of FIG. 2.
FIG. 7 is a drawing showing a rear wall of the battery pack of FIG. 2.
FIG. 8 is a drawing showing a side wall of the battery pack of FIG. 2.
FIG. 9 is a cross-sectional view taken along the cutting line H-H' of FIG. 8.
FIG. 10 is a cross-sectional view taken along the cutting line I-I' of FIG. 8.
FIG. 11 is a cross-sectional view taken along the cutting line J-J' of FIG. 8.
FIG. 12 is a cross-sectional view taken along the cutting line K-K' of FIG. 8.
FIG. 13 is a cross-sectional view taken along the cutting line L-L' of FIG. 8.
FIG. 14 is a drawing showing the combination of the first partition wall and the side wall of FIG. 2.
FIG. 15 is a cross-sectional view taken along the cutting line A-A' of FIG. 3.
FIG. 16 is a drawing showing the combination of the second partition wall and the side wall of FIG. 2.
FIG. 17 is a cross-sectional view taken along the cutting line B-B' of FIG. 3.
FIG. 18 is a drawing showing the combination of the rear wall and the side wall of FIG. 2.
FIG. 19 is a cross-sectional view taken along the cutting line C-C' of FIG. 3.
FIG. 20 is a cross-sectional view taken along the cutting line D-D' of FIG. 1.
FIG. 21 is a cross-sectional view taken along the cutting line E-E' of FIG. 1.
FIG. 22 is a cross-sectional view taken along the cutting line F-F' of FIG. 3.
FIG. 23 is an enlarged drawing showing a part M of FIG. 22.
FIG. 24 is an enlarged drawing showing a part N of FIG. 22.
FIG. 25 is an enlarged drawing showing a part O of FIG. 22.
FIG. 26 is a cross-sectional view taken along the cutting line G-G' of FIG. 3.
FIG. 27 is an enlarged drawing showing a part P of FIG. 26.
FIG. 28 is an enlarged drawing showing a part Q of FIG. 26.
FIG. 29 is an enlarged drawing showing a part R of FIG. 26.
FIG. 30 is a drawing showing some components of the battery pack of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

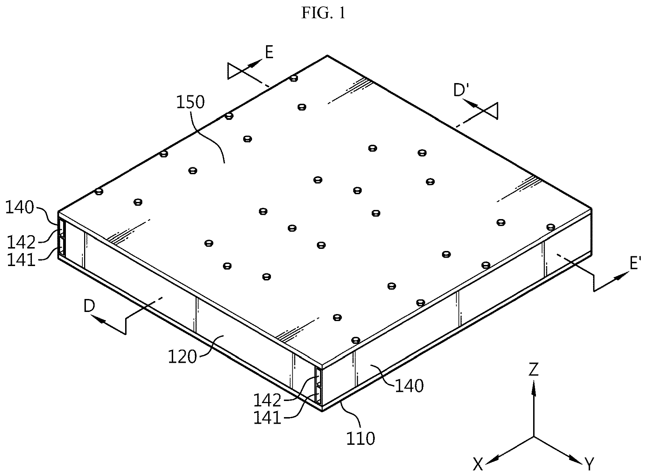

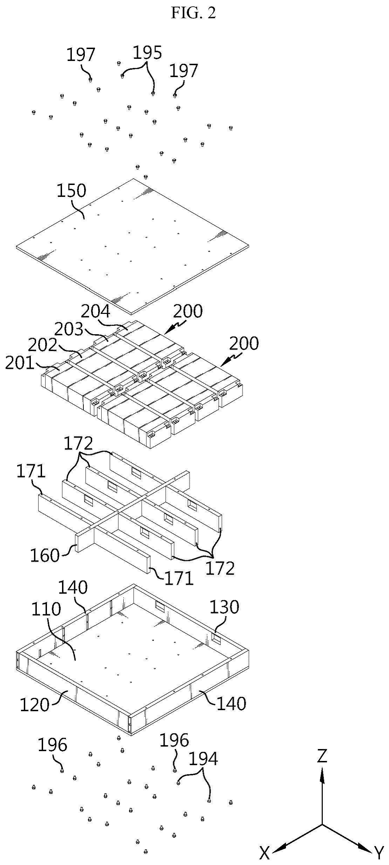

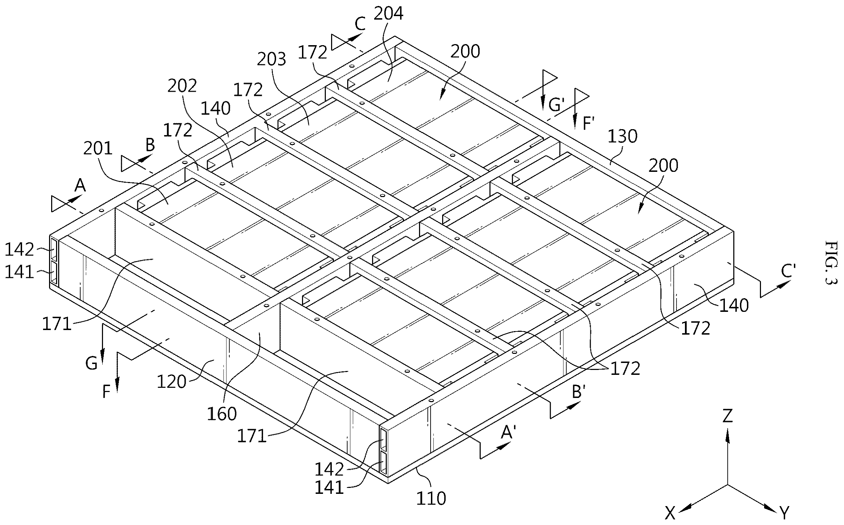

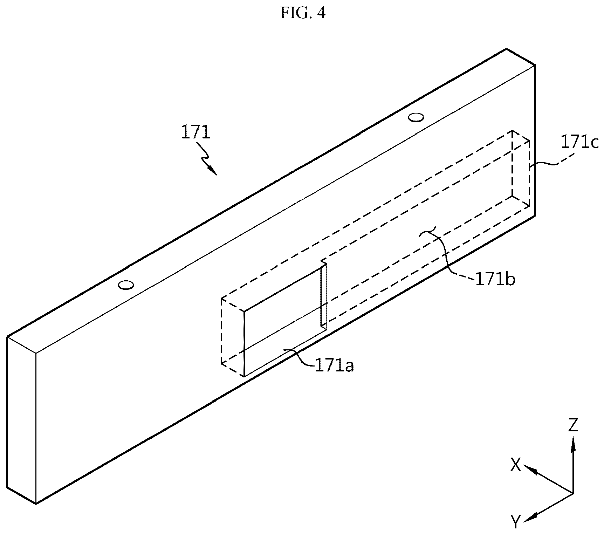

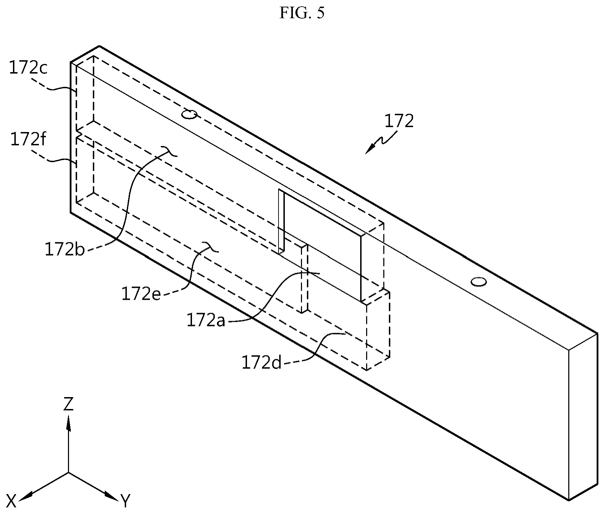

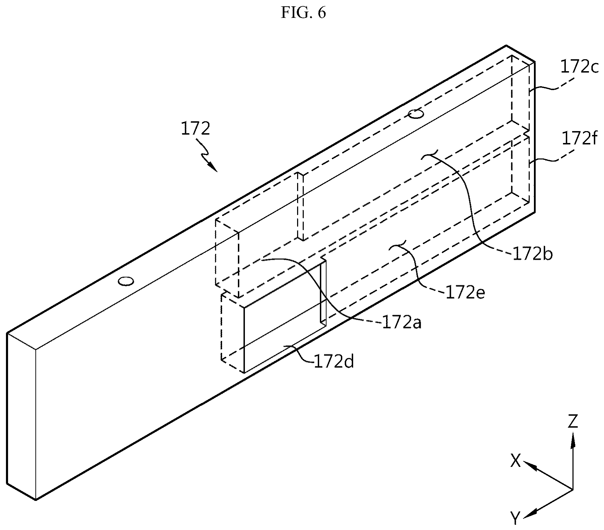

FIG. 1 is a diagram showing a battery pack according to an embodiment of the present disclosure. FIG. 2 is a diagram showing the battery pack of FIG. 1, in which some components are exploded. FIG. 3 is a drawing showing some components of the battery pack of FIG. 1. FIG. 4 is a drawing showing a first partition wall 171 of the battery pack of FIG. 2. FIGS. 5 and 6 are drawings showing a second partition wall 172 of the battery pack of FIG. 2.

Referring to FIGS. 1 to 6, the battery pack according to an embodiment of the present disclosure may include a base plate 110, a side wall 140, a battery module 200, and a partition wall 171, 172.

The base plate 110 may have a flat plate shape. Also, the base plate 110 may have a rectangular shape.

The side wall 140 may be installed on the upper surface of the base plate 110. The side wall 140 may also be referred to as a side beam 140. The side wall 140 may form the appearance of the battery pack. The side wall 140 may be provided as a pair. The side wall 140 may be extended along the front and rear direction or the X-axis direction. The side wall 140 and the base plate 110 may form an inner space.

The front wall 120 may be installed on the upper surface of the base plate 110. The front wall 120 may also be referred to as a front beak 120. The front wall 120 may form the appearance of the battery pack. The front wall 120 may be extended along the right and left direction or the Y-axis direction. The front wall 120 and the base plate 110 may form an inner space.

The rear wall 130 may be installed on the upper surface of the base plate 110. The rear wall 130 may also be referred to as a rear beam 130. The rear wall 130 may form the appearance of the battery pack. The rear wall 130 may be extended along the right and left direction or the Y-axis direction. The rear wall 130 and the base plate 110 may form an inner space.

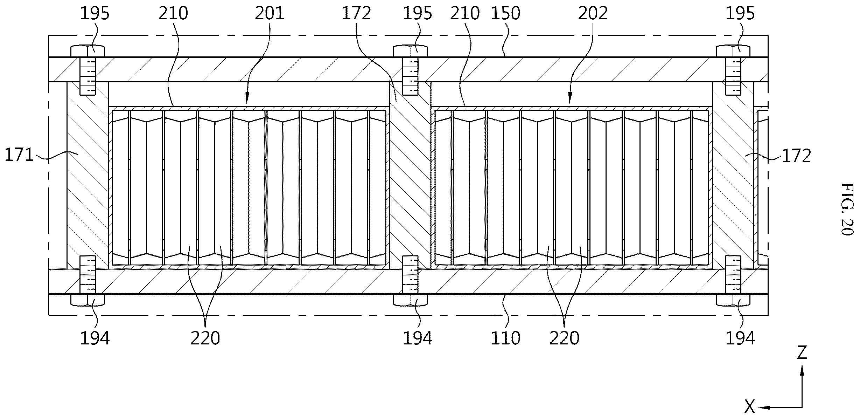

The battery module 200 may be installed in the inner space. The battery module 200 may include a module case 210 (see FIG. 20). In addition, the battery module 200 may include a plurality of battery cells 220 accommodated inside the module case 210. At this time, the battery cell 220 (see FIG. 20) may mean a secondary battery. Also, the battery cell 220 may be a secondary battery having a pouch shape. The battery module 200 may be provided in plurality. The battery module 200 may be used as a general term for commonly calling the first battery module 201, the second battery module 202, the third battery module 203, and the fourth battery module 204.

The center beam 160 may partition the inner space. The center beam 160 may be extended along the front and rear direction or the X-axis direction. The center beam 160 may be installed on the base plate 110.

The partition wall 171, 172 may partition the inner space. The partition wall 171, 172 may be provided in plurality. The partition wall 171, 172 may extend in the right and left direction or the Y-axis direction. The plurality of partition walls 171, 172 may be arranged along the front and rear direction or the X-axis direction. The partition wall 171, 172 may be installed on the base plate 110.

The first partition wall 171 may include a first inlet hole 171a, a first flow path 171b, and a first discharge hole 171c. The first inlet hole 171a may be formed in the rear surface of the first partition wall 171. The first discharge hole 171c may be formed in the left surface of the first partition wall 171. The first flow path 171b may communicate the first inlet hole 171a and the first discharge hole 171c. The first flow path 171b may be formed inside the first partition wall 171 and may extend along the right and left direction or the Y-axis direction. The first inlet hole 171a, the first flow path 171b, and the first discharge hole 171c may be positioned lower than the middle of the Z-axis height of the first partition wall 171.

The second partition wall 172 may include a second inlet hole 172a, a second flow path 172b, and a second discharge hole 172c. The second inlet hole 172a may be formed in the front surface of the second partition wall 172. The second discharge hole 172c may be formed in the left surface of the second partition wall 172. The second flow path 172b may communicate the second inlet hole 172a and the second discharge hole 172c. The second flow path 172b may be formed inside the second partition wall 172 and may extend along the right and left direction or the Y-axis direction.

Also, the second partition wall 172 may include a third inlet hole 172d, a third flow path 172e, and a third discharge hole 172f. The third inlet hole 172d may be formed in the rear surface of the second partition wall 172. The third discharge hole 172f may be formed in the left surface of the second partition wall 172. The third flow path 172e may communicate the third inlet hole 172d and the third discharge hole 172f. The third flow path 172e may be formed inside the second partition wall 172 and may extend along the right and left direction or the Y-axis direction.

The second inlet hole 172a may be located above the third inlet hole 172d. The second flow path 172b may be located above the third flow path 172e. The second discharge hole 172c may be located above the third discharge hole 172f.

The battery modules 200 may be positioned in the order of the first battery module 201, the second battery module 202, the third battery module 203, and the fourth battery module 204 in the front and rear direction. The first battery module 201 may be surrounded by the side wall 140, the first partition wall 171, the center beam 160, and the second partition wall 172. The second battery module 202 may be surrounded by the side wall 140, the pair of second partition walls 172, and the center beam 160. The third battery module 203 may be surrounded by the side wall 140, the pair of second partition walls 172, and the center beam 160. The fourth battery module 204 may be surrounded by the side wall 140, the second partition wall 172, the center beam 160, and the rear wall 130.

According to this configuration of the present disclosure, the thermal safety of the battery pack may be improved. When a thermal event occurs, the venting gas g and ignitable particles may be discharged to the outside of the battery module 200. At this time, the venting gas g and ignitable particles may flow into the inlet holes 171a, 172a, 172d of the partition walls 171, 172, and move through the flow paths 171b, 172b, 172e. As a result, the venting path may be extended long to lower the temperature of the venting gas g, and the ignitable particles may be suppressed from being discharged to the outside of the battery pack.

Referring to FIGS. 1 to 6, the second partition wall 172 may be located between the first battery module 201 and the second battery module 202. The second inlet hole 172a of the second partition wall 172 may face the first battery module 201. Also, the third inlet hole 172d of the second partition wall 172 may face the second battery module 202.

According to this configuration of the present disclosure, the thermal safety of the battery pack may be improved. The second partition wall 172 may include a second flow path 172b communicating with the first battery module 201 and a third flow path 172e communicating with the second battery module 202. In addition, the venting path of the first battery module 201 and the venting path of the second battery module 202 may be formed independently. As a result, heat propagation between the first battery module 201 and the second battery module 202 may be suppressed.

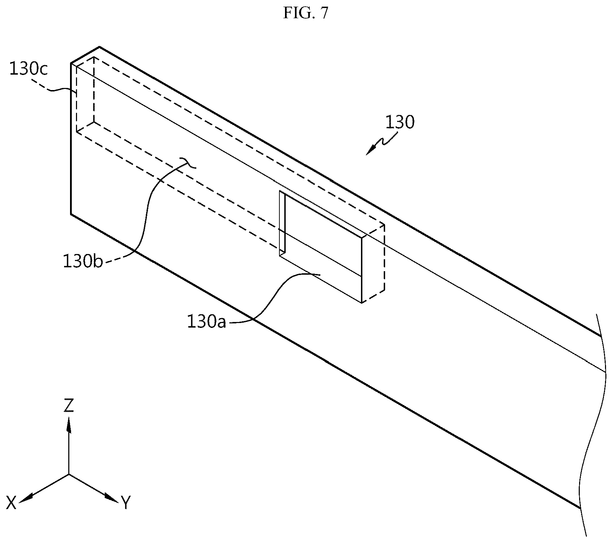

FIG. 7 is a drawing showing a rear wall 130 of the battery pack of FIG. 2. Referring to FIG. 7, the rear wall 130 according to an embodiment of the present disclosure may include a fourth inlet hole 130a, a fourth flow path 130b, and a fourth discharge hole 130c. The fourth inlet hole 130a may be formed in a front surface of the rear wall 130. The fourth discharge hole 130c may be formed in a left surface of the rear wall 130. The fourth flow path 130b may communicate the fourth inlet hole 130a and the fourth discharge hole 130c. The fourth flow path 130b may be formed inside the rear wall 130 and may extend along the right and left direction or the Y-axis direction. The fourth inlet hole 130a, the fourth flow path 130b, and the fourth discharge hole 130c may be positioned higher than the middle of the Z-axis height of the rear wall 130.

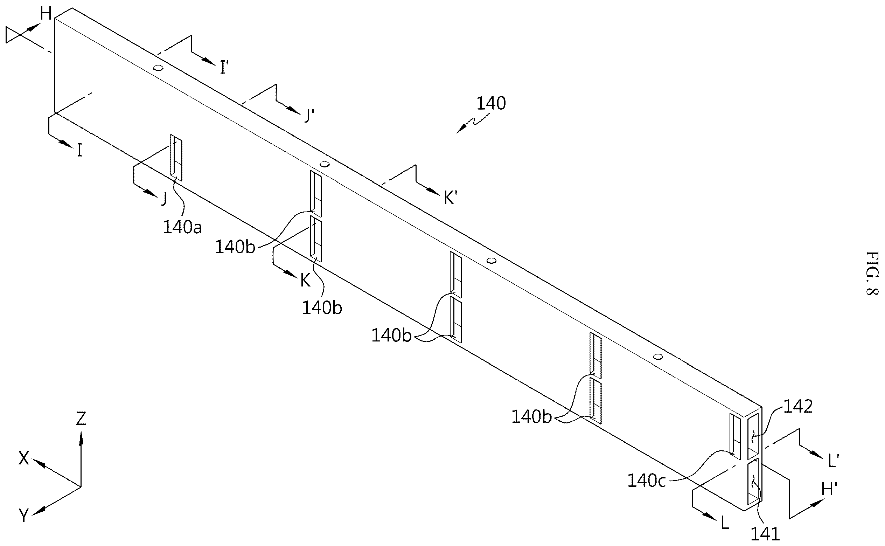

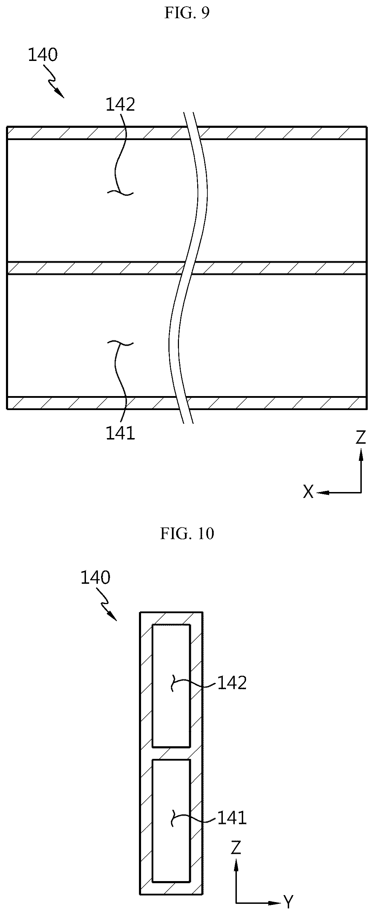

FIG. 8 is a drawing showing a side wall 140 of the battery pack of FIG. 2. FIG. 9 is a cross-sectional view taken along the cutting line H-H' of FIG. 8. FIG. 10 is a cross-sectional view taken along the cutting line I-I' of FIG. 8.

Referring to FIGS. 8 to 10, the side wall 140 of the battery pack according to an embodiment of the present disclosure may be extended long along the front and rear direction or the X-axis direction. The side wall 140 may include a lower flow path 141 and an upper flow path 142. The lower flow path 141 and the upper flow path 142 may be formed inside the side wall 140. The lower flow path 141 and the upper flow path 142 may be extended long along the front and rear direction or the X-axis direction. Cross sections of the upper flow path 142 and the lower flow path 141 may have a rectangular shape. The upper flow path 142 may be located above the lower flow path 141. The upper flow path 142 and the lower flow path 141 may be independently configured. Alternatively, the upper flow path 142 and the lower flow path 141 may be separated or partitioned. Also, the upper flow path 142 and the lower flow path 141 may be formed to penetrate the side wall 140. Also, a venting device may be provided at one end of the upper flow path 142 and the lower flow path 141.

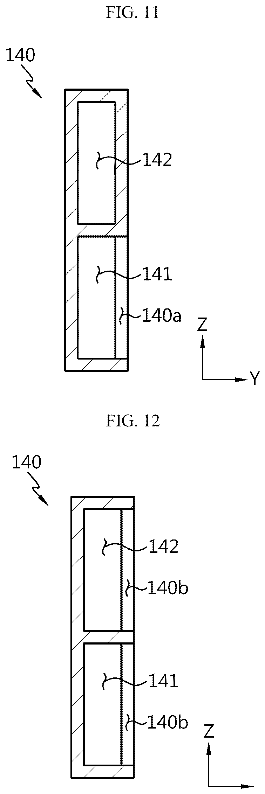

FIG. 11 is a cross-sectional view taken along the cutting line J-J' of FIG. 8. Referring to FIGS. 8 and 11, the side wall 140 of the battery pack according to an embodiment of the present disclosure may include a first hole 140a. The first hole 140a may be formed in the right surface of the side wall 140. The first hole 140a may be communicated with the lower flow path 141.

FIG. 12 is a cross-sectional view taken along the cutting line K-K' of FIG. 8. Referring to FIGS. 8 and 12, the side wall 140 of the battery pack according to an embodiment of the present disclosure may include a second hole 140b. The second hole 140b may be formed in the right surface of the side wall 140. The second hole 140b may be formed as a pair. Also, the pair of second holes 140b may be communicated with the lower flow path 141 and the upper flow path 142, respectively.

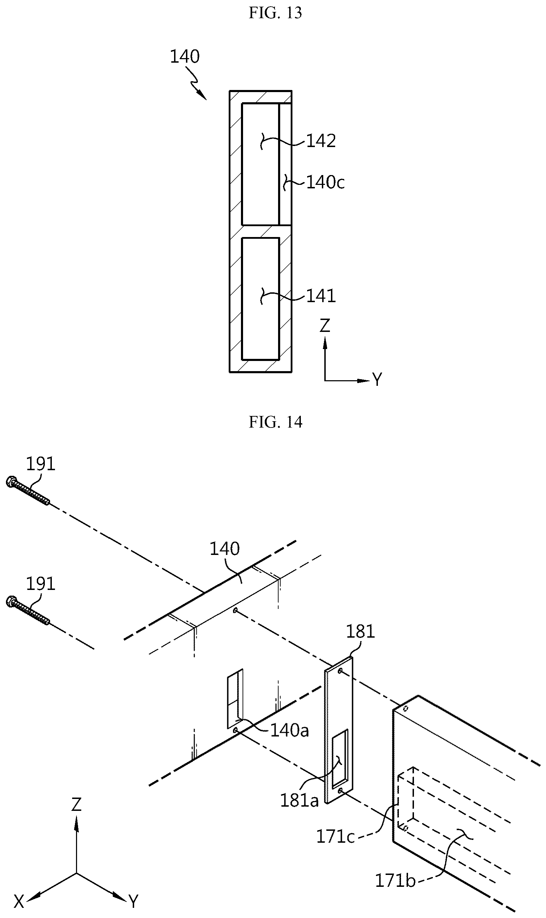

FIG. 13 is a cross-sectional view taken along the cutting line L-L' of FIG. 8. Referring to FIGS. 8 and 13, the side wall 140 of the battery pack according to an embodiment of the present disclosure may include a third hole 140c. The third hole 140c may be formed in the right surface of the side wall 140. The third hole 140c may be communicated with the upper flow path 142.

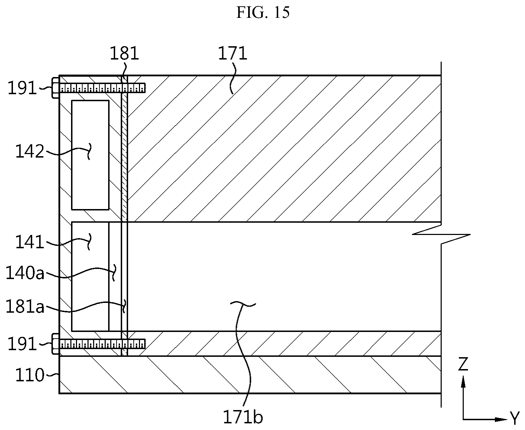

FIG. 14 is a drawing showing the combination of the first partition wall 171 and the side wall 140 of FIG. 2. FIG. 15 is a cross-sectional view taken along the cutting line A-A' of FIG. 3. Referring to FIGS. 14 and 15, the first partition wall 171 of the battery pack according to an embodiment of the present disclosure may be coupled with the side wall 140. The left surface of the first partition wall 171 may be coupled with the right surface of the side wall 140. Also, a first gasket 181 may be disposed between the left surface of the first partition wall 171 and the right surface of the side wall 140. The first gasket 181 may seal the space between the first partition wall 171 and the side wall 140. The first gasket 181 may include a fourth hole 181a. The first discharge hole 171c, the fourth hole 181a, and the first hole 140a may be communicated with each other. Also, the first flow path 171b and the lower flow path 141 may be communicated with each other. The first fastening member 191 may fasten and fix the first partition wall 171, the first gasket 181, and the side wall 140. The first fastening member 191 may penetrate the side wall 140 and the first gasket 181, and may be inserted at least partially into the first partition wall 171.

According to this configuration of the present disclosure, the thermal safety of the battery pack may be improved. When a thermal event occurs, the venting gas g and ignitable particles may be discharged to the outside of the battery module 200. At this time, the venting gas g may be discharged to the outside of the battery pack through the first flow path 171b of the first partition wall 171 and the lower flow path 141 of the side wall 140. As a result, the venting path is extended long to lower the temperature of the venting gas g, and the ignitable particles may be suppressed from being discharged to the outside of the battery pack.

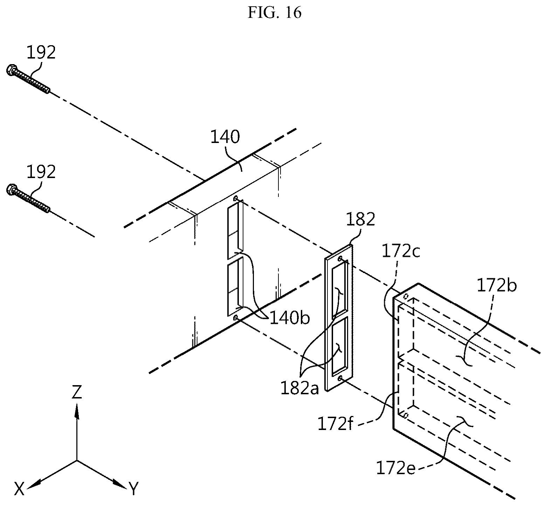

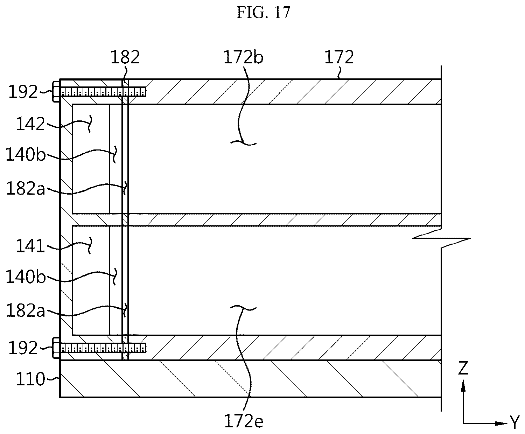

FIG. 16 is a drawing showing the combination of the second partition wall 172 and the side wall 140 of FIG. 2. FIG. 17 is a cross-sectional view taken along the cutting line B-B' of FIG. 3. Referring to FIGS. 16 and 17, the second partition wall 172 of the battery pack according to an embodiment of the present disclosure may be coupled with the side wall 140. The left surface of the second partition wall 172 may be coupled with the right surface of the side wall 140. Also, a second gasket 182 may be disposed between the left surface of the second partition wall 172 and the right surface of the side wall 140. The second gasket 182 may seal the space between the second partition wall 172 and the side wall 140. The second gasket 182 may include a fifth hole 182a. The fifth holes 182a may be formed as a pair. The pair of fifth holes 182a may be disposed in the upper and lower direction.

The third discharge hole 172f, the lower fifth hole 182a, and the lower second hole 140b may be communicated with each other. In addition, the second flow path 172b and the upper flow path 142 may be communicated with each other. Also, the second discharge hole 172c, the upper fifth hole 182a, and the upper second hole 140b may be communicated with each other. In addition, the third flow path 172e and the lower flow path 141 may be communicated with each other.

The second fastening member 192 may fasten and fix the second partition wall 172, the second gasket 182, and the side wall 140. The second fastening member 192 may penetrate the side wall 140 and the second gasket 182, and may be inserted at least partially into the second partition wall 172.

According to this configuration of the present disclosure, the thermal safety of the battery pack may be improved. When a thermal event occurs, the venting gas g and ignitable particles may be discharged to the outside of the battery module 200. At this time, the venting gas g may be discharged to the outside of the battery pack through the second flow path 172b of the second partition wall 172 and the upper flow path 142 of the side wall 140. In addition, the venting gas g may be discharged to the outside of the battery pack through the third flow path 172e of the second partition wall 172 and the lower flow path 141 of the side wall 140. As a result, the venting path is extended long to lower the temperature of the venting gas g, and the ignitable particles may be suppressed from being discharged to the outside of the battery pack.

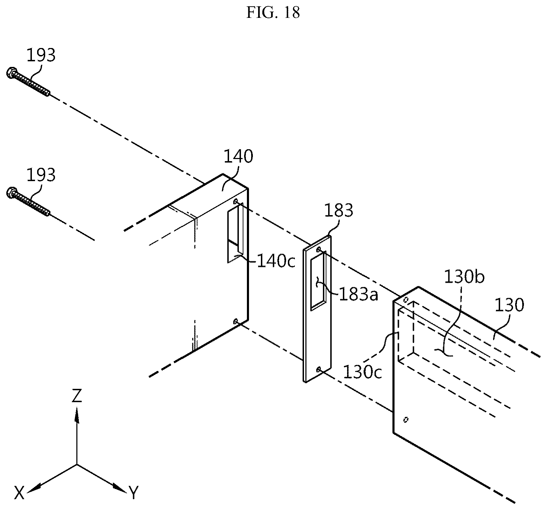

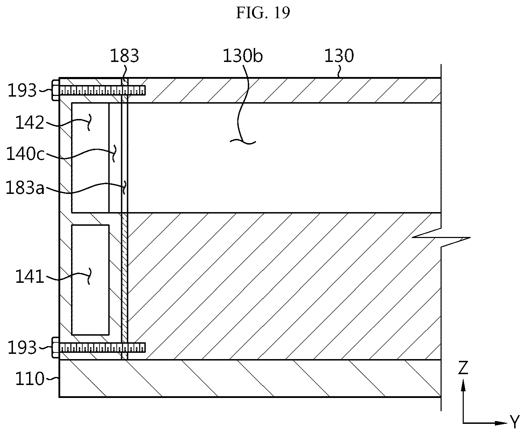

FIG. 18 is a drawing showing the combination of the rear wall 130 and the side wall 140 of FIG. 2. FIG. 19 is a cross-sectional view taken along the cutting line C-C' of FIG. 3. Referring to FIGS. 18 and 19, the rear wall 130 of the battery pack according to an embodiment of the present disclosure may be coupled with the side wall 140.

The rear wall 130 may include a fourth inlet hole 130a, a fourth flow path 130b, and a fourth discharge hole 130c. The fourth inlet hole 130a may be formed in the front surface of the rear wall 130. The fourth discharge hole 130c may be formed in the left surface of the rear wall 130. The fourth flow path 130b may communicate the fourth inlet hole 130a and the fourth discharge hole 130c. The fourth flow path 130b may be formed inside the rear wall 130 and may extend along the right and left direction or the Y-axis direction. The fourth inlet hole 130a, the fourth flow path 130b, and the fourth discharge hole 130c may be positioned higher than the middle of the Z-axis height of the rear wall 130.

The left surface of the rear wall 130 may be coupled to the right surface of the side wall 140. Also, a third gasket 183 may be arranged between the left surface of the rear wall 130 and the right surface of the side wall 140. The third gasket 183 may seal between the rear wall 130 and the side wall 140. The third gasket 183 may include a sixth hole 183a. The fourth discharge hole 130c, the sixth hole 183a, and the third hole 140c may be communicated with each other. In addition, the fourth flow path 130b and the upper flow path 142 may be communicated with each other. The third fastening member 193 may fasten and fix the rear wall 130, the third gasket 183, and the side wall 140. The third fastening member 193 may penetrate the side wall 140 and the third gasket 183, and may be at least partially inserted into the rear wall 130.

According to this configuration of the present disclosure, the thermal safety of the battery pack may be improved. When a thermal event occurs, the venting gas g and ignitable particles may be discharged to the outside of the battery module 200. At this time, the venting gas g may be discharged to the outside of the battery pack through the fourth flow path 130b of the rear wall 130 and the upper flow path 142 of the side wall 140. As a result, the venting path may be extended long to lower the temperature of the venting gas g, and the ignitable particles may be suppressed from being discharged to the outside of the battery pack.

FIG. 20 is a cross-sectional view taken along the cutting line D-D' of FIG. 1. Referring to FIG. 20, the battery pack according to an embodiment of the present disclosure may further include a pack cover 150. The pack cover 150 may have a rectangular plate shape. The pack cover 150 may cover the inner space formed by the base plate 110, the side wall 140, the front wall 120, and the rear wall 130. In addition, the pack cover 150 may be coupled with the first partition wall 171, the second partition wall 172, the side wall 140, the center beam 160, the rear wall 130, and the front wall 120.

According to this configuration of the present disclosure, the thermal safety of the battery pack may be improved. The pack cover 150, the first partition wall 171, the second partition wall 172, the side wall 140, the center beam 160, the rear wall 130, and the front wall 120 may surround each battery module 200. As a result, the venting gas g may be discharged to the outside through the partition wall 171, 172, and the side wall 140 without being propagated to neighboring battery modules 200.

Referring to FIG. 20, the battery pack according to an embodiment of the present disclosure may include a fourth fastening member 194. The fourth fastening member 194 may fasten the base plate 110 and the partition wall 171, 172. The fourth fastening member 194 may penetrate the base plate 110 and at least a portion of the fourth fastening member 194 may be inserted into the partition wall 171, 172.

Also, the battery pack according to an embodiment of the present disclosure may include a fifth fastening member 195. The fifth fastening member 195 may fasten the pack cover 150 and the partition wall 171, 172. The fifth fastening member 195 may penetrate the pack cover 150, and at least a portion of the same may be inserted into the partition wall 171, 172.

According to this configuration of the present disclosure, the thermal safety of the battery pack may be improved. The fourth fastening member 194 and the fifth fastening member 195 may guide the venting gas g generated from the battery module 200 to flow into the partition wall 171, 172 by reinforcing the coupling strength of the partition wall 171, 172, the base plate 110, and the pack cover 150. In addition, the fourth fastening member 194 and the fifth fastening member 195 may prevent the venting gas g from moving to neighboring battery modules 200 by reinforcing the coupling strength of the partition wall 171, 172, the base plate 110, and the pack cover 150.

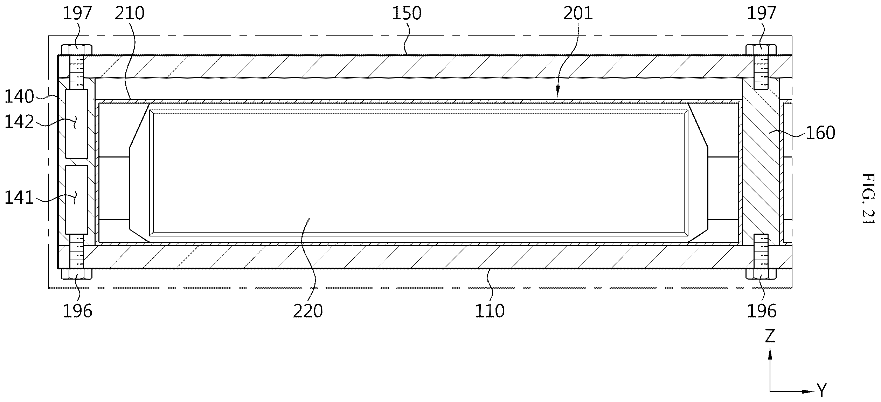

FIG. 21 is a cross-sectional view taken along the cutting line E-E' of FIG. 1. Referring to FIG. 21, the battery pack according to an embodiment of the present disclosure may include a sixth fastening member 196. The sixth fastening member 196 may fasten the base plate 110 and the side wall 140. Also, the sixth fastening member 196 may fasten the base plate 110 and the center beam 160. The sixth fastening member 196 may penetrate the base plate 110, and at least a portion of the sixth fastening member 196 may be inserted into the side wall 140 or the center beam 160.

Also, the battery pack according to an embodiment of the present disclosure may include a seventh fastening member 197. The seventh fastening member 197 may fasten the pack cover 150 and the side wall 140. Also, the seventh fastening member 197 may fasten the pack cover 150 and the center beam 160. The seventh fastening member 197 may penetrate the pack cover 150, and at least a portion of the seventh fastening member 197 may be inserted into the side wall 140 or the center beam 160.

According to this configuration of the present disclosure, the thermal safety of the battery pack may be improved. The sixth fastening member 196 and the seventh fastening member 197 may guide the venting gas g generated from the battery module 200 to flow into the partition wall 171, 172 by reinforcing the coupling strength of the side wall 140, the center beam 160, and the pack cover 150. In addition, the sixth fastening member 196 and the seventh fastening member 197 may prevent the venting gas g from moving to neighboring battery modules 200 by reinforcing the coupling strength of the side wall 140, the center beam 160, and the pack cover 150.

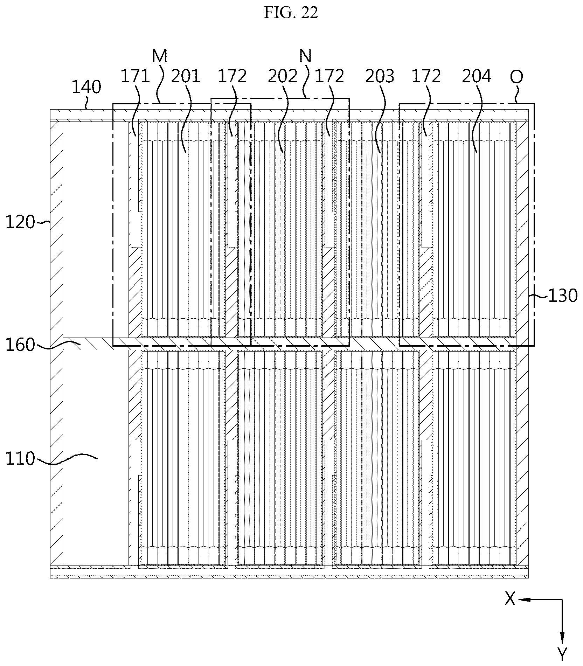

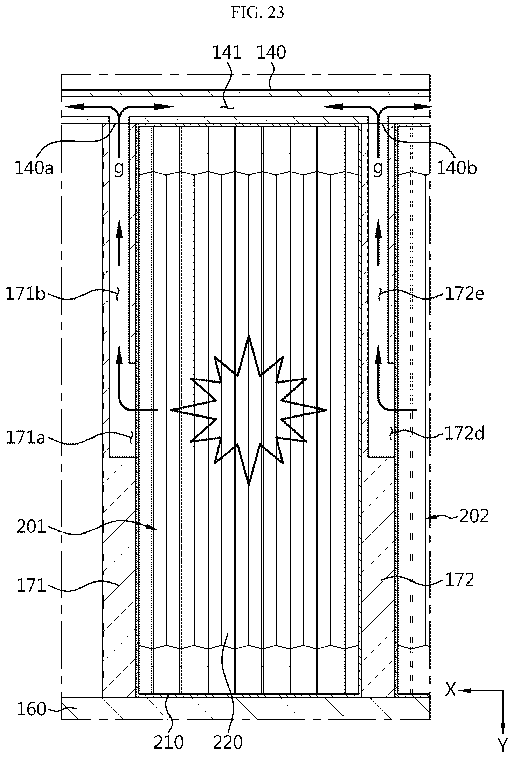

FIG. 22 is a cross-sectional view taken along the cutting line F-F' of FIG. 3. FIG. 23 is an enlarged drawing showing a part M of FIG. 22. Referring to FIGS. 22 and 23, the venting gas g generated from the first battery module 201 of the battery pack according to an embodiment of the present disclosure may be discharged through the first inlet hole 171a, the first flow path 171b and the first discharge hole 171c of the first partition wall 171, and the lower flow path 141 of the side wall 140.

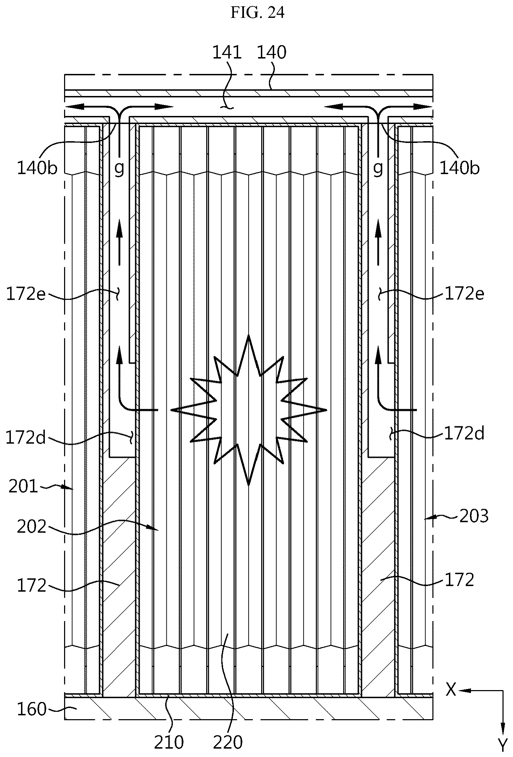

FIG. 24 is an enlarged drawing showing a part N of FIG. 22. Referring to FIGS. 22 to 24, the venting gas g generated from the second battery module 202 of the battery pack according to an embodiment of the present disclosure may be discharged through the second inlet hole 172a, the second flow path 172b and the second discharge hole 172c of the second partition wall 172, and the lower flow path 141 and the side wall 140.

In addition, the venting gas g generated from the third battery module 203 of the battery pack according to an embodiment of the present disclosure may be discharged through the third inlet hole 172d, the third flow path 172e and the third discharge hole 172f of the second partition wall 172, and the lower flow path 141 of the side wall 140.

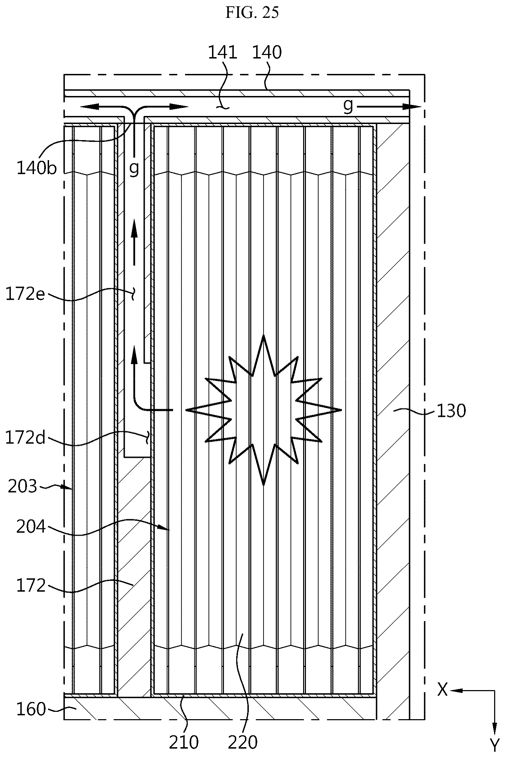

FIG. 25 is an enlarged drawing showing a part O of FIG. 22. Referring to FIGS. 22 and 25, the venting gas g generated from the fourth battery module 204 of the battery pack according to an embodiment of the present disclosure may be discharged through the second inlet hole 172a, the second flow path 172b and the second discharge hole 172c of the second partition wall 172, and the lower flow path 141 of the side wall 140.

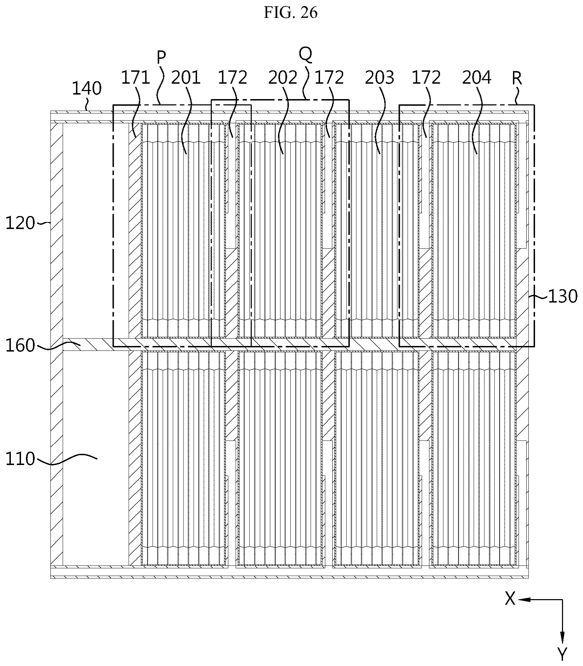

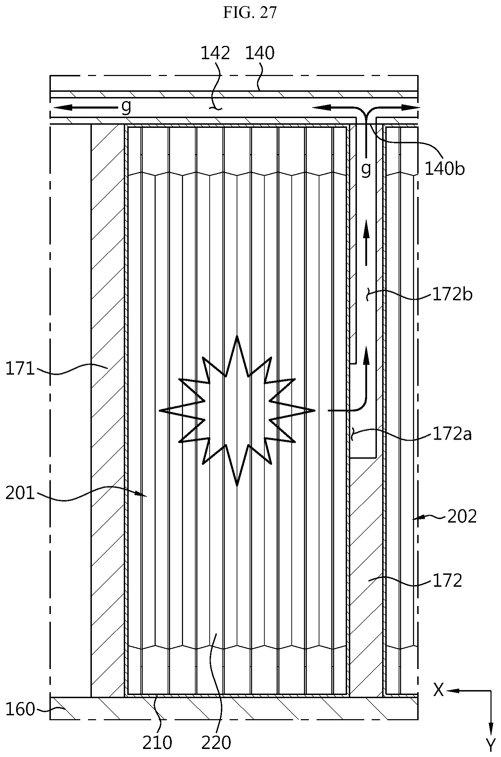

FIG. 26 is a cross-sectional view taken along the cutting line G-G' of FIG. 3. FIG. 27 is an enlarged drawing showing a part P of FIG. 26. Referring to FIGS. 26 and 27, the venting gas g generated from the first battery module 201 of the battery pack according to an embodiment of the present disclosure may be discharged through the second inlet hole 172a, the second flow path 172b and the second discharge hole 172c of the second partition wall 172, and the upper flow path 142 of the side wall 140.

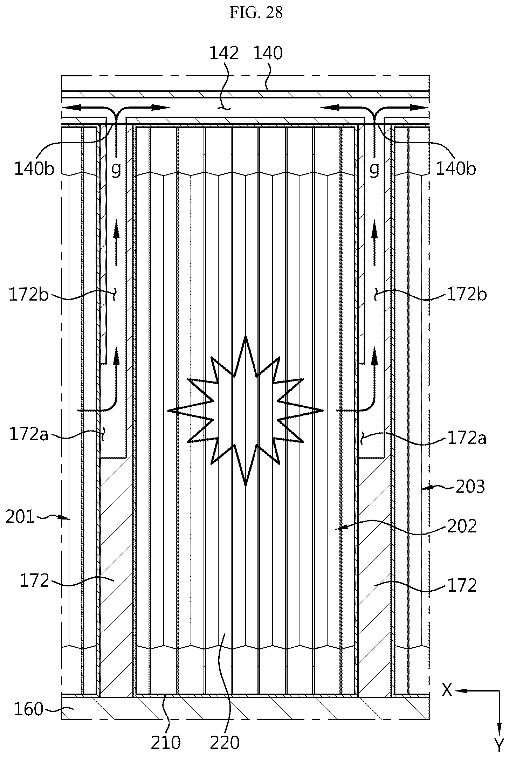

FIG. 28 is an enlarged drawing showing a part Q of FIG. 26. Referring to FIGS. 26 to 28, the venting gas g generated from the second battery module 202 of the battery pack according to an embodiment of the present disclosure may be discharged through the second inlet hole 172a, the second flow path 172b and the second discharge hole 172c of the second partition wall 172, and the upper flow path 142 of the side wall 140.

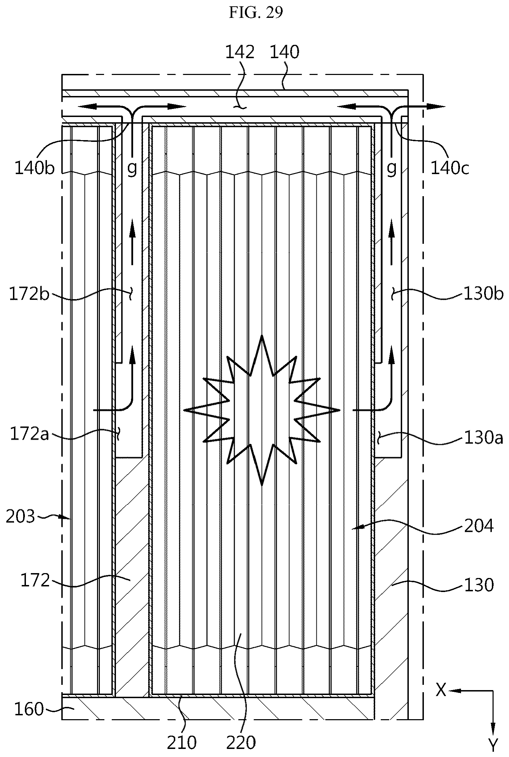

FIG. 29 is an enlarged drawing showing a part R of FIG. 26. Referring to FIGS. 26 and 29, the venting gas g generated from the fourth battery module 204 of the battery pack according to an embodiment of the present disclosure may be discharged through the fourth inlet hole 130a, the fourth flow path 130b and the fourth discharge hole 130c of the rear wall 130, and the upper flow path 142 of the side wall 140.

In addition, the venting gas g generated from the third battery module 203 of the battery pack according to an embodiment of the present disclosure may be discharged through the second inlet hole 172a, the second flow path 172b and the second discharge hole 172c of the second partition wall 172, and the upper flow path 142 of the side wall 140.

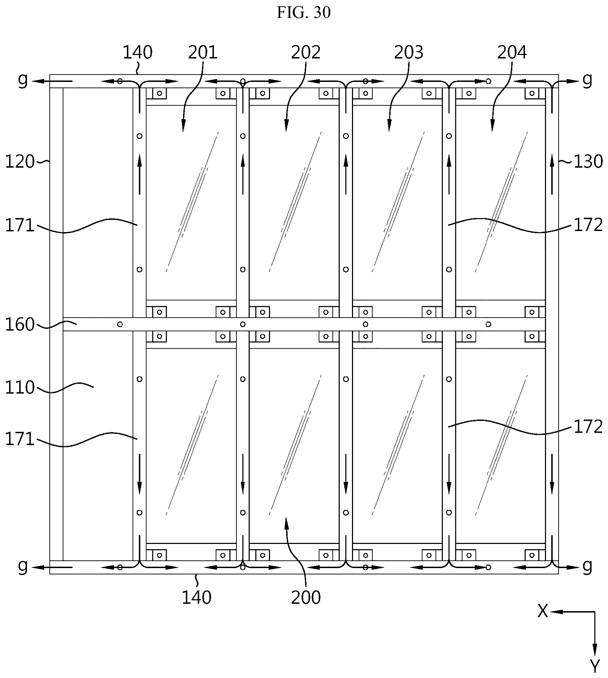

FIG. 30 is a drawing showing some components of the battery pack of FIG. 1. FIG. 30 is a drawing showing the remaining components other than the pack cover 150. Referring to FIG. 30, the venting gas g generated from each battery module 200 may move toward the side wall 140. Alternatively, the venting gas g generated from each battery module 200 may move in a direction away from the center beam 160. As a result, heat transfer to adjacent battery modules 200 may be minimized. In addition, since an independent venting path is provided for each battery module 200, heat transfer may be minimized. In addition, since the venting path is extended long, flames or ignitable particles may be suppressed from being discharged to the outside of the battery pack. In addition, since the venting path is extended long, the venting gas g may be discharged with a lowered temperature to the outside of the battery pack.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate;
a side wall installed on an upper surface of the base plate and forming an inner space;
a first battery module installed in the inner space; and
a partition wall configured to partition the inner space and having a first hole facing the first battery module and a first flow path communicating with the first hole.

2. The battery pack according to claim 1, further comprising:
a second battery module installed in the inner space,
wherein the partition wall is located between the first battery module and the second battery module and has a second hole facing the second battery module and a second flow path communicating with the second hole.

3. The battery pack according to claim 2,
wherein the first flow path and the second flow path extend along a longitudinal direction of the partition wall.

4. The battery pack according to claim 2,
wherein the first flow path is formed above the second flow path.

5. The battery pack according to claim 2, further comprising:
a side wall installed on the upper surface of the base plate and having a third flow path communicating with the first flow path.

6. The battery pack according to claim 5,
wherein the third flow path extends along a longitudinal direction of the side wall.

7. The battery pack according to claim 5,
wherein the side wall has a fourth flow path communicating with the second flow path.

8. The battery pack according to claim 7,
wherein the fourth flow path extends along a longitudinal direction of the side wall.

9. The battery pack according to claim 5, further comprising:
a first fastening member that penetrates the side wall and is fastened to the partition wall.

10. The battery pack according to claim 5, further comprising:
a first gasket disposed between the side wall and the partition wall.

11. The battery pack according to claim 5, further comprising:
a rear wall installed on the upper surface of the base plate to form an appearance of the battery pack and having a fifth flow path communicating with the side wall.

12. The battery pack according to claim 11, further comprising:
a second fastening member that penetrates the side wall and is fastened to the rear wall.

13. The battery pack according to claim 11, further comprising:
a second gasket disposed between the side wall and the rear wall.

14. The battery pack according to claim 1, further comprising:
a pack cover configured to cover the inner space and coupled with the partition wall.

15. The battery pack according to claim 14, further comprising:
a third fastening member that penetrates the pack cover and is fastened to the partition wall.

16. A vehicle comprising the battery pack according to any one of claims 1 to 15.
